# EUROPÄISCHE PATENTANMELDUNG

(11) **EP 2 495 786 A1**
(43) Veröffentlichungstag der Anmeldung: **05.09.2012**
(21) Anmeldenummer: 11156857.2
(22) Anmeldetag: 03.03.2011
(51) Int. Cl.: H01M 2/10, H01M 2/02

(54) **Stapelbares Halteteil für eine Akkumulatorzelle, modulares System und Akkumulator**

(71) Anmelder: Brusa Elektronik AG, 9466 Sennwald (CH)
(72) Erfinder: Brusa, Josef, 9473, Gams (CH)
(74) Vertreter: Patentbüro Paul Rosenich AG

(57) **Zusammenfassung**

Es wird ein stapelbares Halteteil (2a..2c, 2g) für eine spannungserzeugende Zelle (3) eines Akkumulators (1a..1c) angegeben, welches eine Grundwand (5a..5k) sowie wenigstens auf einer Seite der Grundwand (5a..5k) aus dieser herausragende Rahmenwände (6a..6c, 6g) umfasst, wobei die Grundwand (5a..5k) und die Rahmenwände (6a..6c, 6g) dazu eingerichtet sind, die Zelle (3) an mehreren Seiten zu umschliessen. Die Grundwand (5a..5k) und/oder die Rahmenwände (6a..6c, 6g) ist/sind dabei für einen punkt- und/oder linienförmigen Kontakt mit der genannten Zelle (3) vorbereitet und die Grundwand (5a..5k) und die Rahmenwände (6a..6c, 6g) sind einstückig ausgeführt. Weiterhin wird ein modulares System sowie ein Akkumulator (1a..1c) mit wenigstens zwei Halteteilen (2a..2c, 2g) angegeben.

## Beschreibung

Die Erfindung betrifft ein stapelbares Halteteil für eine spannungserzeugende Zelle eines Akkumulators, welches eine Grundwand sowie wenigstens auf einer Seite der Grundwand aus dieser herausragende Rahmenwände umfasst, wobei die Grundwand und die Rahmenwände dazu eingerichtet sind, die Zelle an mehreren Seiten zu umschliessen. Weiterhin betrifft die Erfindung ein modulares System mit wenigstens zwei Halteteilen der genannten Art sowie einen Akkumulator mit mehreren spannungserzeugenden Zellen und mehreren solchen Halteteilen, in denen die Zellen gelagert sind.

In der heutigen Zeit werden vermehrt elektrische und elektronische Geräte verwendet, die unabhängig von einem Stromnetz betrieben werden können. Leistungsstarke Geräte und der Wunsch nach langer Betriebszeit verlangen nach leistungsfähigen Akkumulatoren. Selbstverständlich sollten diese klein und leicht sein, aber dennoch hohen Energieinhalt aufweisen. Insbesondere gelten diese Forderungen für Elektrofahrzeuge. Batterie- oder Akkumulatorbetriebene Elektrofahrzeuge sind aus der heutigen Zeit nicht mehr wegzudenken. War ihre Existenz lange Zeit auf Nischenanwendungen beschränkt, z. B. als Gabelstapler und Grubenhunte, so steht nun eine Einführung von Elektrofahrzeugen im Strassenverkehr in grosser Zahl kurz bevor.

Bedingt durch die bereits jetzt hohen Stückzahlen für Akkumulatoren und die erwartete Steigerungsrate besteht ein grosser Bedarf an einfachen Herstellungsverfahren. Dabei dürfen wesentliche Punkte im Betrieb des Akkumulators jedoch nicht übersehen werden.

Beispielsweise kann eine spannungserzeugende (insbesondere galvanische) Zelle nämlich nur in einem bestimmten

Temperaturbereich ihre optimale Leistung abgeben. Ist sie zu kühl oder zu warm, sinkt ihre Leistungsfähigkeit. Darüber hinaus geht mit einer übermässigen Erwärmung auch die Gefahr einer Schädigung oder sogar Zerstörung der Zelle einher. Im Extremfall kann eine Zelle, oder wenn sich deren Übertemperatur in einer Kettenreaktion auf andere Zellen überträgt, sogar der ganze Akkumulator explodieren. Wegen des grossen Energieinhalts stellen daher insbesondere Akkumulatoren von Elektrokraftfahrzeugen ein erhebliches Gefahrenpotenzial dar, wenn sie nicht gekühlt werden.

Des Weiteren sind Zellen eines Akkumulators im Betrieb zum Teil erheblichen Volumenschwankungen unterworfen, die durch unterschiedliche Ladezustände hervorgerufen werden. Wird diesen Volumenschwankungen nicht entsprechend Rechnung getragen, so können in einem Akkumulator hohe mechanische Spannungen durch den Innendruck der Zelle aufgebaut werden.

Schliesslich ist zu berücksichtigen, dass in der modernen Technik, insbesondere im Kraftfahrzeugbau, eine Vielzahl unterschiedlicher Bautypen von Akkumulatoren benötigt wird, die sich beispielsweise hinsichtlich ihrer Spannung, ihrer Kapazität und/oder hinsichtlich ihrer Aussenabmessungen unterscheiden.

Aus dem Stand der Technik sind einige Offenbarungen bekannt, welche Lösungsansätze für die genannten Probleme bieten. Beispielsweise offenbart die DE 10 2008 027 293 A1 ein Stapel mehrerer prismatischer Einzelzellen, zwischen denen Feder-Wellbleche angeordnet sind, um Kühlkanäle zu bilden und die Zellen gegeneinander zu pressen. Weiterhin sind Zellen offenbart, die mit einem Kühlblech und einem Kunststoff-Formteil verbunden sind. Diese Formteile können Mittel zum Zusammenclipsen und somit zur Bildung eines Zellstapels umfassen.

Die DE 10 2007 001 590 A1 offenbart weiterhin einen Stapel von mehreren prismatischen Einzelzellen (LiIon-Zellen), zwischen denen Wellbleche angeordnet sind, um solcherart Kühlkanäle für Kühlluft zu bilden. Die Zellgehäuse können darüber hinaus Mittel zum Zusammenclipsen der Gehäuse und somit zur Bildung eines Zellstapels vorgesehen sein.

Aus der DE 10 2008 034 874 A1 und auch der DE 10 2008 009 041 A1 sind zudem Kunststoff-Halteteile zur Aufnahme von zylindrischen LiIon-Zellen bekannt. Mehrere dieser Halteteile können zusammengeclipst werden, um einen Zellverbund mit dazwischenliegenden Kühlkanälen zu bilden.

Die DE 10 2008 059 961 A1 zeigt schliesslich eine Anordnung, bei der LiIon-Zellen in einem Gehäuse, bestehend aus einem Kunststoffrahmen und zwei seitlich angeordneten Blechen, angeordnet werden. Der Kunststoffrahmen umfasst Ausnehmungen zur Aufnahme der Bleche bzw. für den Einbau in ein Batteriegehäuse.

Obwohl offensichtlich bereits Anstrengungen unternommen wurden, den Bau von Akkumulatoren zu vereinfachen, fehlt es dennoch an einer eleganten Möglichkeit zur Produktion von Akkumulatoren. Die angesprochenen Probleme sind im Stand der Technik nämlich oft umständlich gelöst.

Aufgabe der Erfindung ist es nun, ein verbessertes Halteteil für eine spannungserzeugende Zelle eines Akkumulators, ein verbessertes modulares System sowie einen verbesserten Akkumulator anzugeben. Insbesondere soll die Produktion eines Akkumulators vereinfacht werden.

Erfindungsgemäss wird diese Aufgabe durch ein Halteteil der eingangs genannten Art gelöst, bei dem die Grundwand und/oder die Rahmenwände für einen punkt- und/oder linienförmigen Kontakt mit der genannten Zelle vorbereitet ist/sind und die Grundwand und die Rahmenwände einstückig ausgeführt sind.

Weiterhin wird die Aufgabe der Erfindung durch ein modulares System mit wenigstens zwei erfindungsgemässen Halteteilen gelöst. Schliesslich wird die Aufgabe der Erfindung durch einen Akkumulator mit mehreren spannungserzeugenden Zellen gelöst, der mehrere erfindungsgemässe Halteteile umfasst, in denen die Zellen gelagert sind.

Durch die Erfindung werden gleich mehrere Nachteile des Standes der Technik überwunden, denn das Halteteil übernimmt eine Vielzahl an Funktionen:
- Befestigung beziehungsweise Positionierung der Zellen
- durch den lediglich punkt- und/oder linienförmigen Kontakt zur Zelle wird eine Ausdehnungskompensation derselben erzielt
- durch den lediglich punkt- und/oder linienförmigen Kontakt zur Zelle werden zusätzlich auch Hohlräume beziehungsweise Kanäle für einen Wärmeträger zur Temperierung des Akkumulators geschaffen
- die Kühlkanäle sind beliebig gestaltbar, insbesondere kann der Anpressdruck zu einer Zelle gezielt eingestellt werden und der Wärmeträger kann beliebig geführt, insbesondere auch verwirbelt werden
- der Wärmeträger steht in direktem Kontakt zur Zelle, sodass ein guter Wärmeübergang gewährleistet ist
- durch die Stapelbarkeit wird die Produktion von vielen Akkumulatortypen ermöglicht
- auch bei Verwendung "weicher" Akkumulatorzellen mit flexiblem (insbesondere beutelförmigem) Gehäuse wird durch die gestapelten Halteteile ein stabiles Akkumulatorgehäuse gebildet
- der Anpressdruck und die Kontaktstellen zur Zelle sind einstellbar beziehungsweise frei gestaltbar (punktförmig, linienförmig, unterbrochene Linien, flach, abgerundet usw.)
- dadurch, dass das Halteteil einstückig aufgebaut ist, ist es auch einfach recycelbar, da keine unterschiedlichen Materialien voneinander getrennt werden müssen, insbesondere wenn auf eine Verklebung der Teile verzichtet wird
- dadurch, dass für den Aufbau eines Akkumulators nur wenige verschiedene Teile benötigt werden, kann der Akkumulator sowohl von Hand als auch maschinell schnell und kostengünstig hergestellt beziehungsweise auch wieder demontiert werden, beispielsweise für Reparaturzwecke oder für die Entsorgung
- wegen der wenigen benötigten Teile ist auch die Gefahr von fehlerhaft zusammengebauten Akkumulatoren äusserst gering
- da nur wenige Teile für den Aufbau eines Akkumulators benötigt werden, ergibt sich auch ein geringes Gewicht desselben

Obwohl sich die Erfindung im Besonderen für einen Akkumulators eines Elektrokraftfahrzeugs eignet, bezieht sich die Erfindung natürlich auch auf Akkumulatoren für andere Zwecke, insbesondere auch für stationäre Anlagen und mobile Geräte.

An dieser Stelle wird zudem angemerkt, dass unter "punkt- und/oder linienförmigem Kontakt" im Rahmen der Erfindung nicht unendlich kleine Kontaktflächen zu verstehen sind, sondern der Begriff in Bezug auf die gesamte Fläche des Grundteils oder des Rahmenteils zu verstehen ist. "Punkt- und/oder linienförmiger Kontakt" bedeutet also, dass die Kontaktfläche im Vergleich zur Fläche des Grundteils oder des Rahmenteils relativ klein ist. Bevorzugt bildet die Summe der Kontaktflächen weniger als 70 % der Gesamtfläche des Grundteils oder des Rahmenteils, weiter bevorzugt weniger als 80 % und noch weiter bevorzugt weniger als 90 %.

Vorteilhafte Ausgestaltungen und Weiterbildungen der Erfindung ergeben sich aus den Unteransprüchen sowie aus der Beschreibung in Zusammenschau mit den Figuren der Zeichnung bzw. sind durch sie geoffenbart.

Günstig ist es, wenn entlang der gesamten Begrenzungskante der Grundwand Rahmenwände angeordnet sind. Auf diese Weise wird die Akkumulatorzelle sehr gut durch das Halteteil geschützt, da sie an vielen Seiten durch das Halteteil eingeschlossen wird.

Günstig ist es auch, wenn auf beiden Seiten der Grundwand Rahmenwände angeordnet sind. Auf diese Weise kann ein Halteteil gleichzeitig zwei Zellen aufnehmen.

Vorteilhaft ist es, wenn das erfindungsgemässe Halteteil Vertiefungen und/oder Vorsprünge umfasst, welche dazu eingerichtet sind, mit Vorsprüngen und/oder Vertiefungen eines benachbarten Halteteils zusammenzuwirken. Dadurch können die Halteteile sehr leicht zueinander positioniert werden beziehungsweise wird dadurch eine seitliche Verschiebung der Halteteile gegeneinander ausgeschlossen. Beispielsweise kann ein Halteteil dazu Nuten oder Noppen aufweisen.

Besonders vorteilhaft ist es, wenn das erfindungsgemässe Halteteil Vertiefungen und/oder Vorsprünge umfasst, welche dazu eingerichtet sind, mit Vorsprüngen und/oder Vertiefungen eines benachbarten Halteteils zusammenzuwirken und eine Rast-, Clips- beziehungsweise Schnappverbindung zu bilden. Auf diese Weise kann der Stapel sehr leicht dauerhaft miteinander verbunden beziehungsweise auch wieder zerlegt werden.

Vorteilhaft ist es auch, wenn die Vorsprünge Sollbruchstellen aufweisen. Auf diese Weise können diese leicht abgebrochen werden, wenn das Halteteil am Ende des Akkumulators zu liegen kommt und die Vorsprünge über das Gehäuse vorstehen würden.

Günstig ist es zudem, wenn das erfindungsgemässe Halteteil wenigstens ein in Stapelrichtung ausgerichtetes Loch umfasst. Werden mehrere Halteteile übereinander gestapelt, so kann durch die übereinander liegenden Löcher beispielsweise eine Gewindestange gesteckt werden, um den Stapel zu verschrauben und ihn damit noch stabiler zu gestalten.

Vorteilhaft ist es, wenn die Grundwand und/oder die Rahmenwände im Bereich der Zelle wellblechartig ausgebildet ist/sind. Wellblechartige Formen lassen sich einerseits relativ leicht herstellen, bieten wegen des linienförmigen Kontakts zur Zelle aber auch eine schonende Möglichkeit, Volumenschwankungen auszugleichen, bei der das Zellgehäuse nicht allzu stark belastet wird.

Vorteilhaft ist es auch, wenn die Grundwand und/oder die Rahmenwände im Bereich der Zelle gitterartig mit bevorzugt räumlicher Struktur (beispielsweise mit würfelartiger Gitterstruktur) ausgebildet ist/sind. Dadurch wird das Halteteil einerseits sehr leicht, andererseits entstehen bei Durchströmung mit einem Wärmeträger Verwirbelungen, welche den Wärmeübergang zwischen Zelle und Wärmeträger begünstigen.

Vorteilhaft ist es zudem, wenn die Grundwand und/oder die Rahmenwände im Bereich der Zelle ein ebenes Gitter und/oder eine ebene Platte mit von dem Gitter beziehungsweise der Platte wegweisenden Fortsätzen umfasst. Insbesondere bei Verwendung einer ebenen Platte ist die Herstellung einer Grundwand, die relativ stabil ist, vergleichsweise einfach. Wird ein ebenes Gitter verwendet, so ist die Grundwand besonders leicht.

Vorteilhaft ist es darüber hinaus, wenn die Fortsätze stift- und/oder stegförmig sind. Stiftförmige Fortsätze haben nur einen kleinen Anteil an der Fläche der Grundwand, weswegen die zur Temperierung der Zellen verfügbare Fläche relativ gross ist. Stegförmige Fortsätze bieten dagegen eine sehr gute Stützfunktion für die Zellen.

Vorteilhaft ist es weiterhin, wenn die Fortsätze laschenbeziehungsweise zungenförmig aus der Platte herausragen. Volumenschwankungen der Zelle können so besonders gut ausgeglichen werden, da die Fortsätze bei dieser Ausführungsvariante wie (Blatt-)Federn wirken.

Vorteilhaft ist es, wenn die Fortsätze auf beiden Seiten der Grundwand versetzt angeordnet sind. Auf diese Weise wird die Grundwand etwas "weicher" und kann Volumenschwankungen der Zelle besser ausgleichen.

Vorteilhaft ist es auch, wenn die Grundwand und/oder die Rahmenwände im Bereich der Zelle vliesartig ausgebildet ist/sind. Ein Vlies ist besonders flexibel, weswegen es sich einer äusseren Form einer Zelle besonders gut anpasst und Toleranzen und Unebenheiten der Zellen gut ausgeglichen werden können. Zusätzlich sind Hohlräume für die Durchströmung mit einem Wärmeträger vorhanden.

Vorteilhaft ist es, wenn der für den Kontakt zu einer Zelle vorgesehene Anteil der Grundwand über die Fläche der Grundwand variiert. Auf diese Weise kann die Stützfunktion der Grundwand gesteuert werden. Besonders vorteilhaft ist es in diesem Zusammenhang, wenn der genannte Anteil in der Mitte der Grundwand höher ist als an deren Randbereich. Vorteilhaft wird eine sich ausbeulende Wand einer Zelle bei Volumenschwankungen derselben in der Mitte dadurch stärker gestützt, sodass es nicht zu einer übermässigen Verengung des Kanals zwischen zwei Zellen oder gar einem Verschluss desselben kommt. Somit bleibt eine Temperierung der Zellen mit Hilfe des Wärmeträgers stets gewährleistet.

Vorteilhaft ist es, wenn das erfindungsgemässe Halteteil im Bereich der Rahmenwände angeordnete Ausnehmungen beziehungsweise Kanäle umfasst, welche einen für die Zelle vorgesehenen Raum mit der Umgebung des Halteteils verbinden. Auf diese Weise kann ein Wärmeträger den Akkumulator durchströmen beziehungsweise kann der Akkumulator über die genannten Ausnehmungen/Kanäle mit einem Kühl/Heizsystem verbunden werden. Alternativ oder zusätzlich können auch die Anschlussfahnen der Zelle über die genannten Ausnehmungen nach aussen geführt werden.

Besonders vorteilhaft ist es, wenn das Halteteil aus Kunststoff gefertigt ist. Auf diese Weise kann das Halteteil besonders kostengünstig hergestellt werden, beispielsweise im Spritzgussverfahren. Zudem können komplexe Formen relativ leicht in die Realität umgesetzt werden.

Ein besonders vorteilhaftes modulares System ist zudem dann gegeben, wenn wenigstens zwei Halteteile identisch aufgebaut sind. Dadurch können der technische Aufwand und die Kosten für die Herstellung der Halteteile gesenkt werden. Zudem vereinfacht sich der Aufbau eines Akkumulators, wenn nur wenige verschiedene Teile miteinander zu verbinden sind.

Günstig ist es schliesslich, wenn die Form des Akkumulators im Wesentlichen quaderförmig ist. Dadurch kann der Akkumulator gut gestapelt werden. Zudem ergibt sich bei Verwendung von prismatischen Akkumulatorzellen eine gute Ausnützung des zur Verfügung stehenden Raumes und somit ein kompakter Aufbau des Akkumulators.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispielen näher erläutert. Es zeigen dabei:
- Fig. 1: schematisch eine erste Variante eines erfindungsgemässen Akkumulators in Schrägansicht;
- Fig. 2: den Akkumulator aus Fig. 1 im Vertikalschnitt;
- Fig. 3: den Akkumulator aus Fig. 1 in Draufsicht;
- Fig. 4: eine weitere Variante des erfindungsgemässen Akkumulators mit alternativen Halteteilen im Vertikalschnitt;
- Fig. 5: den Akkumulator aus Fig. 4 in Draufsicht;
- Fig. 6: eine weitere Variante des erfindungsgemässen Akkumulators mit sehr schmalen Halteteilen im Vertikalschnitt;
- Fig. 7: den Akkumulator aus Fig. 6 in Draufsicht;
- Fig. 8: ein Detail des Akkumulators in Schnittdarstellung auf Höhe eines Schnapphakens;
- Fig. 9: ein Detail des Akkumulators in Schnittdarstellung auf Höhe eines Vorsprungs eines Halteteils, welches in eine Vertiefung eines benachbarten Halteteils eingreift;
- Fig. 10: einen Horizontalschnitt durch einen Akkumulator auf Höhe einer Grundwand 5d mit gerundetem wellblechartigem Profil;
- Fig. 11: wie Fig. 10, nur mit trapezförmigem Profil;
- Fig. 12: eine Grundwand, bei der zwei wellblechförmige Abschnitte gegeneinander verschoben sind;
- Fig. 13: eine Grundwand mit einer ebenen Platte mit abstehenden Fortsätzen;
- Fig. 14: wie Fig. 13, jedoch mit einem ebenen Gitter anstelle der ebenen Platte;
- Fig. 15: eine Grundwand mit einer ebenen Platte und gegeneinander versetzten Fortsätzen;
- Fig. 16: eine Grundwand mit laschen- beziehungsweise zungenförmigen Fortsätzen;
- Fig. 17: eine Grundwand, welche im Bereich der Zelle vliesartig ausgebildet ist und
- Fig. 18: eine Draufsicht auf ein Halteteil mit ungleichmässig über die Fläche verteilten Fortsätzen.

In den Figuren der Zeichnungen sind gleiche und ähnliche Teile mit gleichen Bezugszeichen und funktionsähnliche Elemente und Merkmale - sofern nichts anderes ausgeführt ist - mit gleichen Bezugszeichen, aber unterschiedlichen Indizes versehen.

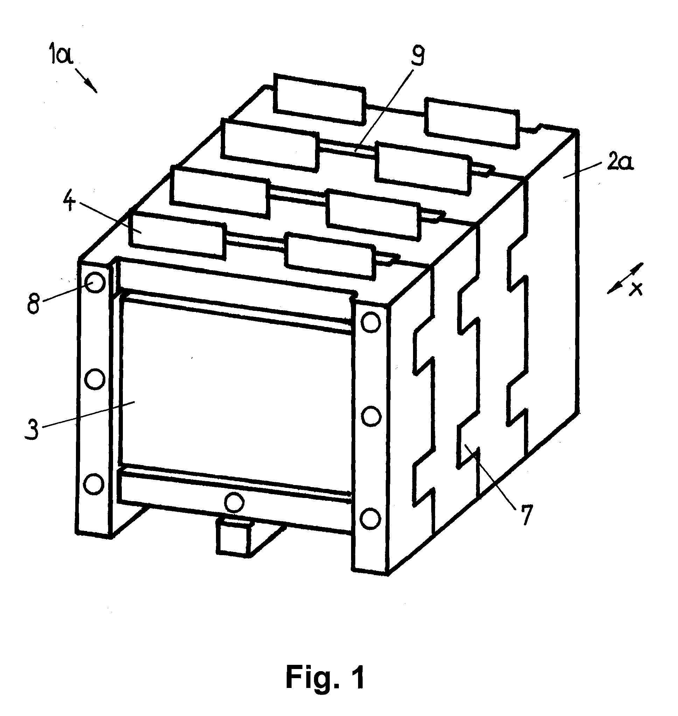

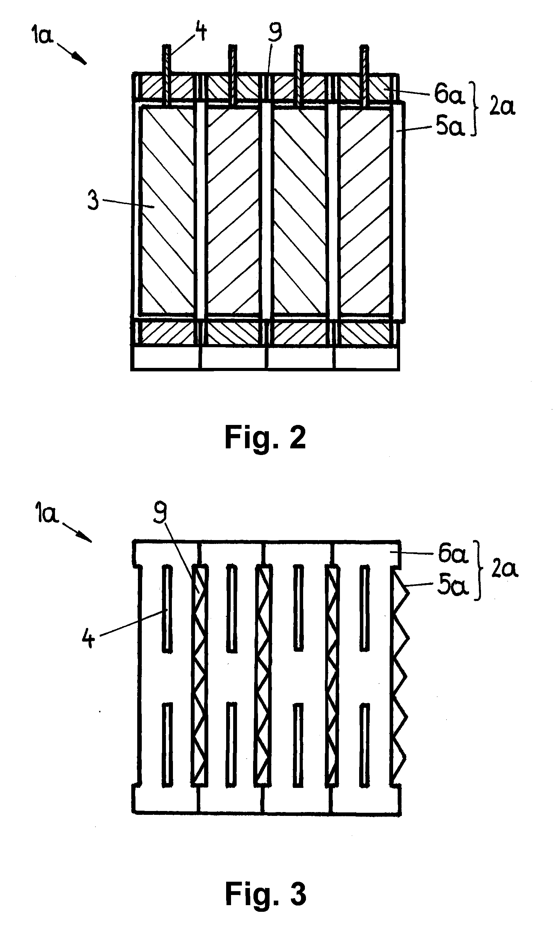

Fig. 1 zeigt ein erstes Beispiel für einen erfindungsgemässen Akkumulator 1a in Schrägansicht, Fig. 2 im Vertikalschnitt und Fig. 3 in Draufsicht. Der Akkumulator 1a umfasst mehrere Halteteile 2a, in denen spannungserzeugende Zellen 3 mit Zellanschlüssen 4 gelagert sind. Das Halteteil 2a umfasst eine Grundwand 5a sowie wenigstens auf einer Seite der Grundwand 5a aus dieser herausragende Rahmenwände 6a. Im gezeigten Beispiel sind an der gesamten Begrenzungskante der Grundwand 5a Rahmenwände 6a angeordnet. Die Grundwand 5a und die Rahmenwände 6a umschliessen die Zelle 3 an mehreren Seiten, im konkreten Beispiel wird die prismatische und im Wesentlichen quaderförmige Zelle 3 vom Halteteil 2a an fünf Seiten umschlossen. Die Grundwand 5a ist für einen linienförmigen Kontakt mit der Zelle 3 vorbereitet und einstückig mit den Rahmenwänden 6a ausgeführt. Konkret ist die Grundwand 5a im Bereich der Zelle 3 wellblechartig ausgebildet. Das Halteteil 2a ist einstückig aufgebaut und vorzugsweise aus Kunststoff (z. B. im Spritzgussverfahren) gefertigt.

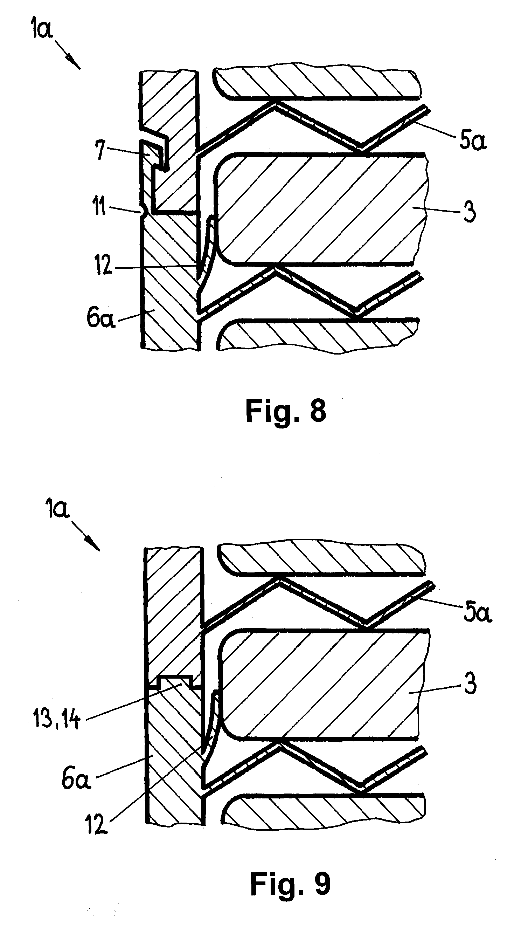

Die Halteteile 2a sind in einer Stapelrichtung x stapelbar. Auf diese Weise kann ein Akkumulator 1a mit beliebig vielen Zellen 3 hergestellt werden. Damit die Halteteile 2a dauerhaft miteinander verbunden werden können, weist ein Halteteil Vertiefungen und/oder Vorsprünge auf, welche dazu eingerichtet sind, mit Vorsprüngen und/oder Vertiefungen eines benachbarten Halteteils 2a zusammenzuwirken und eine Rast-, Clips- beziehungsweise Schnappverbindung zu bilden. Konkret umfasst das Halteteil 2a einen Schnapphaken 7, welcher in Fig. 8 im Detail abgebildet ist. Zusätzlich weist das Halteteil 2a mehrere in der Stapelrichtung x ausgerichtete Löcher 8 auf, durch welche beispielsweise Gewindestangen gesteckt und verschraubt werden können, um die Stabilität des Akkumulators 1a weiter zu erhöhen.

Ausserdem umfasst der Akkumulator 1a an der Ober- und Unterseite mehrere Ausnehmungen 9, welche jeweils durch zwei benachbarte

Halteteile 2a gebildet werden und einen für die Zelle 3 vorgesehenen Raum mit der Umgebung des Halteteils 2a verbinden. Durch diese Ausnehmungen 9 kann ein Wärmeträger (flüssig oder gasförmig) über die wellblechartigen Grundwände 5a den Akkumulator 1a passieren und diesen temperieren. Vorteilhaft kommt der Wärmeträger dabei direkt mit den Zellen 3 in Kontakt, sodass ein guter Wärmeübergang gewährleistet ist. Weiterhin ermöglichen die Grundwände 5a einen Ausgleich der Volumenänderung der Zellen 3, die beim Laden und Entladen auftritt. Mithilfe der Halteteile 2a kann der Akkumulator 1a somit auf einfache Weise aufgebaut werden, und darüber hinaus ermöglichen diese eine Temperierung des Akkumulators 1a sowie eine Volumenänderung der Zellen 3. Durch die (identischen) Halteteile 2a wird zudem ein modulares System geschaffen, mit dem der Aufbau einer Vielzahl unterschiedlicher Akkumulatoren 1a auf einfache Weise ermöglicht wird.

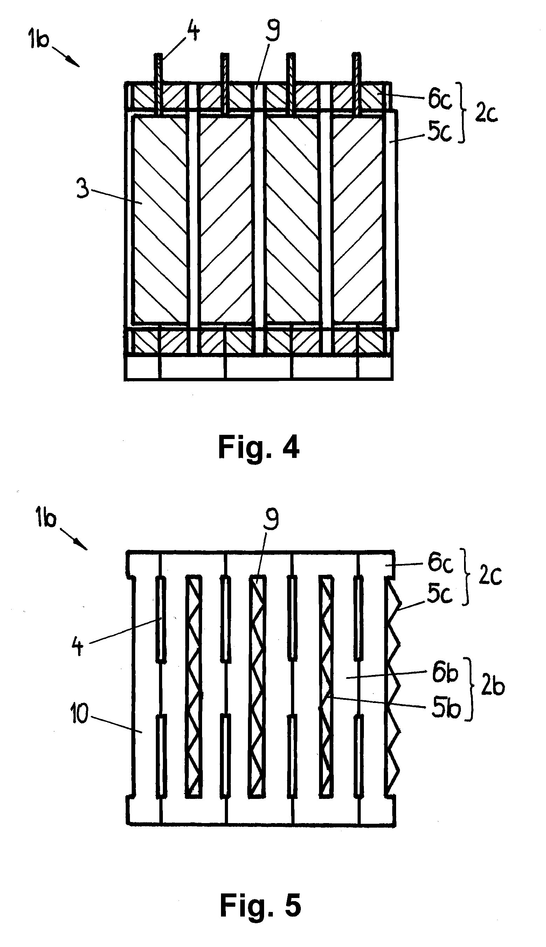

Die Fig. 4 zeigt nun eine weitere Ausführungsform eines erfindungsgemässen Akkumulators 1b im Schnitt, die Fig. 5 in Draufsicht. Der Akkumulator 1b ist ähnlich aufgebaut wie der Akkumulator 1a, jedoch ist der Aufbau der Halteteile 2b etwas anders. Beim Halteteil 2b sind nämlich auf beiden Seiten der Grundwand 5b Rahmenwände 6b angeordnet, sodass das Halteteil 2b jeweils eine linke und eine rechte Zelle 3 zur Hälfte umschliesst. Zusätzlich ist ein weiteres, halb so dickes Halteteil 2c mit einer Grundwand 5c und Rahmenwänden 6c vorgesehen, welches den Abschluss des Akkumulators 1b am rechten Ende bildet. Am linken Ende wird der Akkumulator 1b durch einen Ergänzungsrahmen 10 abgeschlossen. Vorteilhaft kommt die Trennebene der Halteteile 2b auf Höhe der Zellanschlüsse 4 zu liegen, sodass diese nicht wie beim Halteteil 1a in dafür vorgesehene Ausnehmungen eingefädelt, sondern bloss in eine solche eingelegt werden brauchen.

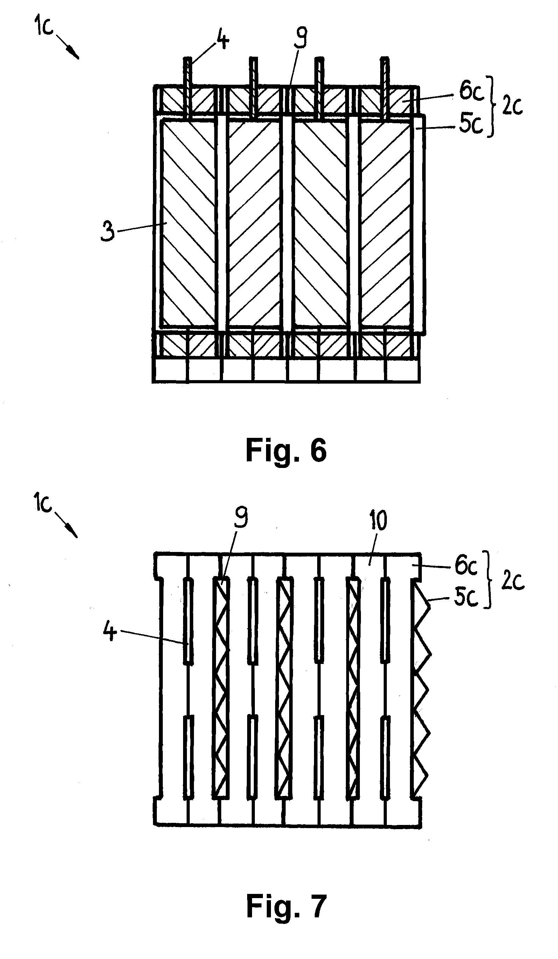

Die Fig. 6 zeigt nun eine weitere Ausführungsform eines erfindungsgemässen Akkumulators 1c im Schnitt, die Fig. 7 in Draufsicht. Der Akkumulator 1c ist wiederum ähnlich zu den bereits vorgestellten Bautypen, allerdings werden hier nur die Halteteile 2c sowie die Ergänzungsrahmen 10 kombiniert.

Fig. 8 zeigt nun ein Detail des Akkumulators 1a in Schnittdarstellung auf Höhe eines Schnapphakens 7 (Schnitt horizontal geführt). Hierbei ist deutlich zu sehen, dass dieser in eine Vertiefung eines benachbarten Halteteils 2a eingreift.

Zusätzlich weist der Schnapphaken 7 eine optionale Sollbruchstelle 11 auf, wodurch dieser, wenn das Halteteil 2a am Ende des Akkumulators 1a zu liegen kommt, leicht abgebrochen werden kann. Weiterhin ist in Fig. 8 zu erkennen, dass die Rahmenwand 6a einen laschen- beziehungsweise zungenförmigen Fortsatz 12 aufweist, welcher die Zelle 3 auch seitlich fixiert, gleichzeitig aber auch die Möglichkeit für einen Volumenausgleich der Zelle 3 sowie eine Temperierung derselben über deren Längsseiten ermöglicht.

Fig. 9 zeigt einen Schnitt durch den Akkumulator 1a auf Höhe eines (in den Figuren 1 bis 3 nicht dargestellten) Vorsprungs 13 eines Halteteils 2a, welcher dazu eingerichtet ist, mit einer Vertiefung 14 eines benachbarten Halteteils 2a zusammenzuwirken. Auf diese Weise können benachbarte Halteteile 2a sehr exakt zueinander positioniert werden beziehungsweise kann eine Verschiebung der beiden Halteteile 2a gegeneinander vermieden werden. In Kombination mit den Schnapphaken 7 entsteht so ein sehr stabiler Verbund der Halteteile 2a.

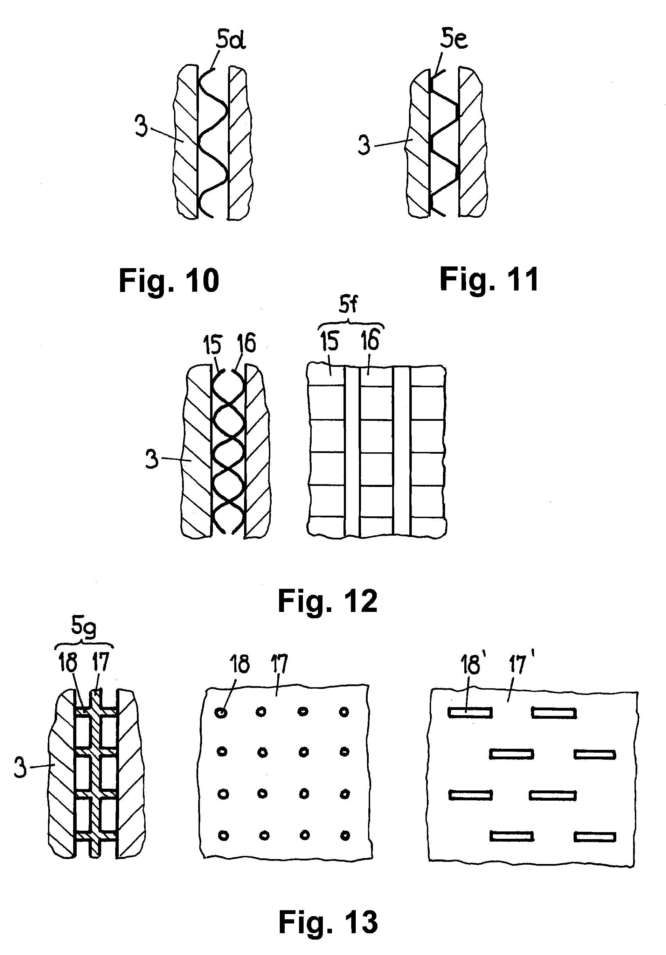

Fig. 10 zeigt einen Horizontalschnitt durch einen Akkumulator auf Höhe einer Grundwand 5d, welche wie die Grundwand 5a wellblechartig geformt ist, allerdings nicht mit einem Dreiecksprofil, sondern mit einem gerundeten Profil.

Fig. 11 zeigt einen Querschnitt durch einen Akkumulator auf Höhe einer Grundwand 5e, welche wie die Grundwand 5a wellblechartig geformt ist, allerdings mit einem trapezförmigen Profil.

Fig. 12 zeigt eine Variante der Erfindung, bei der zwei wellblechförmige Abschnitte 15 und 16 der Grundwand 5f gegeneinander verschoben sind.

Fig. 13 zeigt eine Grundwand 5g, welche im Bereich der Zelle 3 eine ebene Platte 17 mit von der Platte wegweisenden Fortsätzen 18 umfasst, im Schnitt (linkes Bild) beziehungsweise in Draufsicht (mittleres Bild), wobei die Fortsätze stiftförmig (hier zylindrisch) geformt sind. Im rechten Bild ist eine Draufsicht auf eine Variante der Grundwand 5g dargestellt, bei der die Fortsätze 18' stegförmig (hier quaderförmig) geformt sind.

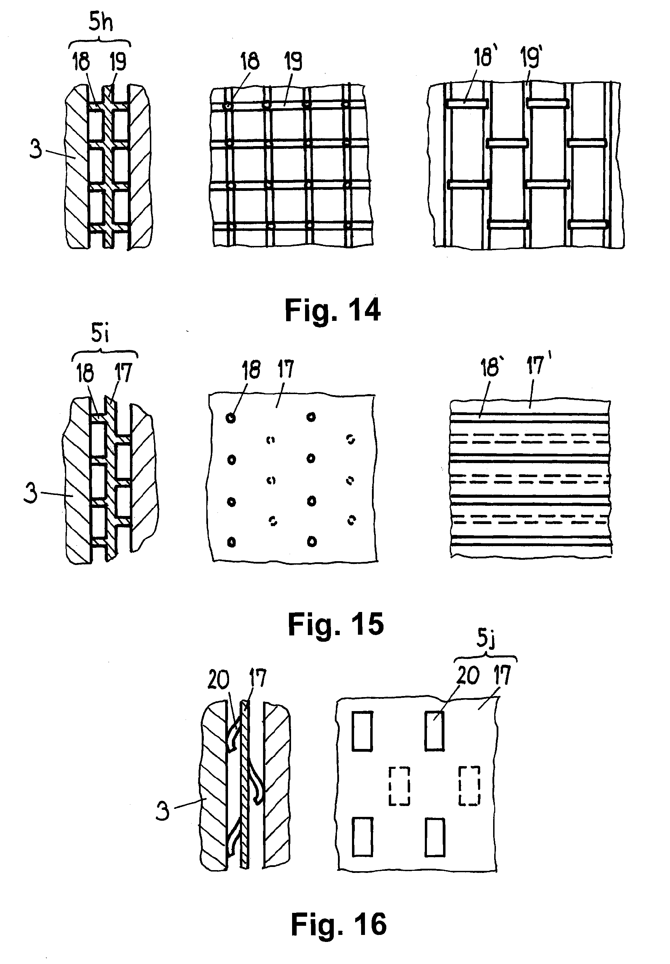

Fig. 14 zeigt eine Grundwand 5h, welche ähnlich wie die Grundwand 5g aufgebaut ist. Anstelle der ebenen Platte 17 ist jedoch ein ebenes Gitter 19 bzw. 19' vorgesehen.

Fig. 15 zeigt eine Grundwand 5i, welche ähnlich wie die Grundwand 5g aufgebaut ist. Die Fortsätze 18 auf beiden Seiten der Grundwand 5i sind jedoch versetzt angeordnet. Darüber hinaus sind die stegförmigen Fortsätze 18` in der rechten Darstellung durchgehend und bilden somit Rippen.

Fig. 16 zeigt ein weiteres Beispiel der Erfindung in Form einer Grundwand 5j mit laschen- beziehungsweise zungenförmigen Fortsätzen 20, die beidseits der ebenen Platte 17 herausragen.

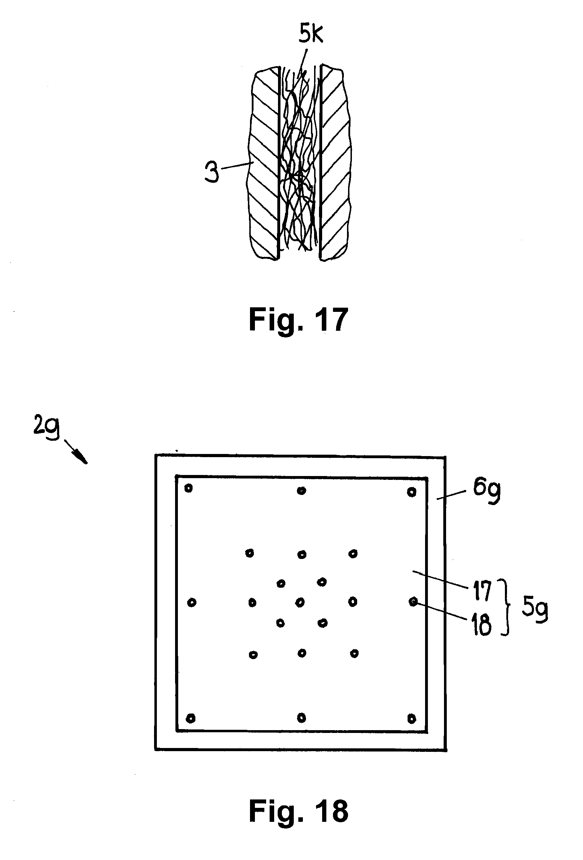

Fig. 17 zeigt nun eine Grundwand 5k, welche im Bereich der Zelle 3 vliesartig ausgebildet ist. Beispielsweise kann es sich dabei um ein Kunststoffgeflecht handeln, das mit ebenfalls aus Kunststoff bestehenden Rahmenwänden verschweisst ist, sodass wiederum ein einstückiges Halteteil entsteht.

Fig. 18 zeigt schliesslich eine Draufsicht auf ein Halteteil 2g, welches aus der bereits in der Fig. 13 gezeigten Grundwand 5g und Rahmenwänden 6g besteht. Wie aus der Fig. 18 deutlich entnehmbar ist, sind die Fortsätze 18 in einer bevorzugten Ausführungsform nicht gleichmässig über die Grundwand 5g beziehungsweise die ebene

Platte 17 verteilt, sondern der für den Kontakt zu einer Zelle 3 vorgesehene Anteil der Grundwand 5g variiert über die Fläche derselben. Konkret ist der genannte Anteil in der Mitte der Grundwand 5g höher als an deren Randbereich. Vorteilhaft wird eine sich ausbeulende Wand einer Zelle 3 bei Volumenschwankungen derselben in der Mitte somit stärker gestützt, sodass es nicht zu einer übermässigen Verengung des Kanals zwischen zwei Zellen 3 oder gar einem Verschluss desselben kommt. Auf diese Weise kann eine Temperierung der Zellen 3 mithilfe des Wärmeträgers stets gewährleistet werden.

### Bezugszeichenliste

- x: Stapelrichtung
- 1a..1c: Akkumulator
- 2a..2c, 2g: Halteteil
- 3: spannungserzeugende Zelle
- 4: Zellanschluss
- 5a..5k: Grundwand
- 6a..6c, 6g: Rahmenwand
- 7: Rasthaken
- 8: Loch
- 9: Ausnehmung
- 10: Ergänzungsrahmen
- 11: Sollbruchstelle
- 13: Vorsprung
- 14: Vertiefung
- 15: wellblechförmiger Abschnitt
- 16: wellblechförmiger Abschnitt
- 17, 17': ebene Platte
- 18, 18': Fortsatz
- 19, 19': ebenes Gitter
- 20: zungenförmiger Fortsatz

## Patentansprüche

1. Stapelbares Halteteil (2a..2c, 2g) für eine spannungserzeugende Zelle (3) eines Akkumulators (1a..1c), umfassend eine Grundwand (5a..5k) sowie wenigstens auf einer Seite der Grundwand (5a..5k) aus dieser herausragende Rahmenwände (6a..6c, 6g), wobei die Grundwand (5a..5k) und die Rahmenwände (6a..6c, 6g) dazu eingerichtet sind, die Zelle (3) an mehreren Seiten zu umschliessen,
**dadurch gekennzeichnet,**
**dass** die Grundwand (5a..5k) und/oder die Rahmenwände (6a..6c, 6g) für einen punkt- und/oder linienförmigen Kontakt mit der genannten Zelle (3) vorbereitet ist/sind und die Grundwand (5a..5k) und die Rahmenwände (6a..6c, 6g) einstückig ausgeführt sind.

2. Halteteil (2a..2c, 2g) nach Anspruch 1, **dadurch gekennzeichnet, dass** entlang der gesamten Begrenzungskante der Grundwand (5a..5k) Rahmenwände (6a..6c, 6g) angeordnet sind.

3. Halteteil (2b) nach Anspruch 1 oder 2, **dadurch gekennzeichnet, dass** auf beiden Seiten der Grundwand (5b) Rahmenwände (6b) angeordnet sind.

4. Halteteil (2a) nach einem der Ansprüche 1 bis 3, **gekennzeichnet durch** Vertiefungen (14) und/oder Vorsprünge (13), welche dazu eingerichtet sind, mit Vorsprüngen (13) und/oder Vertiefungen (14) eines benachbarten Halteteils (2a) zusammenzuwirken.

5. Halteteil (2a) nach einem der Ansprüche 1 bis 4, **gekennzeichnet durch** Vertiefungen und/oder Vorsprünge (7), welche dazu eingerichtet sind, mit Vorsprüngen (7) und/oder Vertiefungen eines benachbarten Halteteils (2a) zusammenzuwirken und eine Rast-, Clips- beziehungsweise Schnappverbindung zu bilden, wobei die Vorsprünge (7) vorzugsweise Sollbruchstellen (11) aufweisen.

6. Halteteil (2a) nach einem der Ansprüche 1 bis 5, **gekennzeichnet durch** wenigstens ein in eine Stapelrichtung (x) des Halteteils (2a) ausgerichtetes Loch (8).

7. Halteteil (2a..2c) nach einem der Ansprüche 1 bis 6, **dadurch gekennzeichnet, dass** die Grundwand (5a..5f) und/oder die Rahmenwände (6a..6c) im Bereich der Zelle (3) wellblechartig ausgebildet ist/sind.

8. Halteteil (2a..2c, 2g) nach einem der Ansprüche 1 bis 6, **dadurch gekennzeichnet, dass** die Grundwand (5h) und/oder die Rahmenwände (6a..6c, 6g) im Bereich der Zelle (3) gitterartig ausgebildet ist/sind.

9. Halteteil (2a..2c, 2g) nach einem der Ansprüche 1 bis 6, **dadurch gekennzeichnet, dass** die Grundwand (5g..5j) und/oder die Rahmenwände (6a..6c, 6g) im Bereich der Zelle (3) ein ebenes Gitter (19, 19') und/oder eine ebene Platte (17, 17') mit von dem Gitter (19, 19') beziehungsweise der Platte (17, 17') wegweisenden Fortsätzen (18, 18') umfasst.

10. Halteteil (2a..2c, 2g) nach Anspruch 9, **dadurch gekennzeichnet, dass** die Fortsätze (18, 18') stift- und/oder stegförmig sind.

11. Halteteil (2a..2c, 2g) nach Anspruch 9, **dadurch gekennzeichnet, dass** die Fortsätze (12, 20) laschenbeziehungsweise zungenförmig aus der Platte (17) herausragen und/oder **dass** die Fortsätze (18, 18', 20) auf beiden Seiten der Grundwand (5i) versetzt angeordnet sind.

12. Halteteil (2a..2c, 2g) nach einem der Ansprüche 1 bis 6, **dadurch gekennzeichnet, dass** die Grundwand (5k) und/oder die Rahmenwände (6a..6c, 6g) im Bereich der Zelle (3) vliesartig ausgebildet ist/sind.

13. Halteteil (2g) nach einem der Ansprüche 1 bis 12, **dadurch gekennzeichnet, dass** der für den Kontakt zu einer Zelle (3) vorgesehene Anteil der Grundwand (5g) über die Fläche der Grundwand (5g) variiert, wobei vorzugsweise der genannte Anteil in der Mitte der Grundwand (5g) höher ist als an deren Randbereich.

14. Halteteil (2a..2c) nach einem der Ansprüche 1 bis 13, **gekennzeichnet durch** im Bereich der Rahmenwände (6a..6c) angeordnete Ausnehmungen (9) beziehungsweise Kanäle, welche einen für die Zelle (3) vorgesehenen Raum mit der Umgebung des Halteteils (2a..2c) verbinden, und/oder dass der Halteteil (2a..2c, 2g) aus Kunststoff gefertigt ist.

15. Modulares System, **gekennzeichnet durch** wenigstens zwei Halteteile (2a..2c, 2g) nach einem der Ansprüche 1 bis 18, bei dem vorzugsweise wenigstens zwei Halteteile (2a..2c, 2g) identisch aufgebaut sind.

16. Akkumulator (1a..1c) mit mehreren spannungserzeugenden Zellen (3), **gekennzeichnet durch** mehrere Halteteile (2a..2c) nach einem der Ansprüche 1 bis 18, in denen die Zellen (3) gelagert sind, wobei die Form des Akkumulators (1a..1c) im Wesentlichen quaderförmig ist.
